# EUROPÄISCHE PATENTANMELDUNG

(11) **EP 4 125 190 A1**
(43) Veröffentlichungstag der Anmeldung: **01.02.2023**
(21) Anmeldenummer: 21188965.4
(22) Anmeldetag: 30.07.2021
(51) Int. Cl.: H02K 7/20, H02K 11/25, H02N 1/00, H02K 11/00

(54) **ELEKTROMOTOR MIT EINER ENERGY-HARVESTING-EINRICHTUNG**

(71) Anmelder: voestalpine Automotive Components Dettingen GmbH & Co. KG, 72581 Dettingen an der Erms (DE); Hochschule Esslingen University of Applied Sciences, 73728 Esslingen am Neckar (DE)
(72) Erfinder: Bursy, Heinrich, 73268 Erkenbrechtsweiter (DE)
(74) Vertreter: Jell, Friedrich

(57) **Zusammenfassung**

Es wird ein Elektromotor (1), insbesondere permanentmagneterregter Synchronmotor, gezeigt. Um einer Statorwicklung (4) eines Stators (3) des Elektromotors (1) ausreichend Energie entziehen und zudem zuverlässige Messdaten von einem Rotor (2) des Elektromotors (1) erfassen zu können, wird vorgeschlagen, dass die Energy-Harvesting-Einrichtung (10) und die Messeinrichtung (13) am Rotor (2) vorgesehen sind, wobei die Energy-Harvesting-Einrichtung (10) mindestens eine Elektrode (11a, 11b) zum Entziehen von elektrischer Energie aus einem sich zwischen dieser Elektrode (11a, 11a) und dem Wicklungskopf (5a, 5b, 5c) als Gegenelektrode ausbildenden elektrischen Feld (14) aufweist, welche Elektrode (11a, 11b) sich in Umfangsrichtung (U) des Rotors (2) erstreckt und neben der Strinseite (2a) des Rotors (2) angeordnet ist.

## Beschreibung

Die Erfindung betrifft einen Elektromotor, insbesondere permanentmagneterregter Synchronmotor, mit einem Stator, der eine Statorwicklung zur Erzeugung eines Statordrehfelds aufweist, wobei die elektrische Statorwicklung mindestens einen Wicklungskopf aufweist, mit einem Rotor, mit einer Energy-Harvesting-Einrichtung, die ausgebildet ist, dem Wicklungskopf der Statorwicklung Energie zu entziehen, und mit einer Messeinrichtung, die für ihre elektrische Energieversorgung mit der Energy-Harvesting-Einrichtung verbunden ist.

Aus der WO2010/136052A1 ist bekannt, von einem Wicklungskopf eines Stators eines Elektromotors magnetische Energie zu entziehen, also "zu harvesten", um damit eine Messeinrichtung, beispielsweise zur Temperaturmessung, elektrisch zu versorgen. Die zur Energiegewinnung vorgesehenen Energy-Harvesting-Einrichtung sowie die Messeinrichtung sind an einem stationären Teil des Elektromotors, nämlich an dessen Lagerschild, angeordnet. Diese Anordnung lässt jedoch nachteilig eine exakte Messdatenerfassung von sich drehenden Teilen des Elektromotors, beispielsweise vom Rotor, nicht zu bzw. bedarf eines vergleichsweise hohen technischen Aufwands hierfür.

Die Erfindung hat sich daher die Aufgabe gestellt, einen Elektromotor der eingangs geschilderten Art derart konstruktiv zu verändern, dass eine exakte Messdatenerfassung am Rotor mit autarker Energieversorgung möglich wird.

Die Erfindung löst die gestellte Aufgabe durch die Merkmale des Anspruchs 1.

Indem die Energy-Harvesting-Einrichtung und die Messeinrichtung am Rotor vorgesehen sind, eröffnet sich die Möglichkeit, direkt am Rotor des Elektromotors Messdaten, beispielsweise von physikalischen Größen, zu erfassen. Um trotz des synchronen Mitlaufens des Rotors mit dem Drehfeld eine ausreichende elektrische Energieversorgung sicherstellen zu können, weist die Energy-Harvesting-Einrichtung mindestens eine Elektrode zum Entziehen von elektrischer Energie aus einem sich zwischen dieser Elektrode und dem Wicklungskopf als Gegenelektrode ausbildenden elektrischen Feld auf, welche Elektrode sich in Umfangsrichtung des Rotors erstreckt und neben der Strinseite des Rotors angeordnet ist. Dadurch kann eine ausreichende Leistung an elektrischer Energie der Energy-Harvesting-Einrichtung zur Verfügung gestellt werden, um somit standfest elektrische Verbraucher am Rotor elektrisch versorgen zu können. Dies ist insbesondere von Vorteil, wenn es sich um einen permanentmagneterregten Synchronmotor handelt und daher am Rotor keine Rotorwicklungen für eine Fremderregung vorhanden sind. Eine exakte autarke Messdatenerfassung von rotorspezifischen Messgrößen, beispielsweise der Temperatur, wird auf diese Weise möglich.

Vorzugsweise bildet eine Leiterbahn die Elektrode aus. Die Leiterbahn verläuft beispielsweise bandförmig.

Um eine vergleichsweise hohe elektrische Feldstärke zwischen Elektrode und Gegenelektrode bzw. dem Wicklungskopf sicherzustellen und hierzu den Abstand zwischen diesen zu minimieren, kann vorgesehen sein, dass die Elektrode dem Rotor radial vorspringend vorgesehen ist.

Eine kompakte Baugröße kann erreicht werden, wenn der Rotor ein Rotorjoch und einen, insbesondere elektrisch isolierenden, Leitungsträger aufweist, der am Rotorjoch befestigt ist und die Elektrode trägt.

Vorzugsweise weist der Leitungsträger einen im Querschnitt kreisringförmigen Abschnitt auf, an dem die Elektrode vorgesehen ist - was die Konstruktion weiter vereinfachen kann. Vorzugsweise ist der Abschnitt hierfür hohlzylindrisch ausgebildet.

Die Konstruktion der Energy-Harvesting-Einrichtung kann weiter vereinfacht werden, wenn der Leitungsträger aus Kunststoff besteht, auf dem die Elektrode aufgedruckt ist.

Die erste Elektrode ist auf einer Außenseite des Leitungsträgers vorgesehen, um den Abstand zwischen Elektrode und Gegenelektrode zu gering zu halten. Damit kann ein vergleichsweise starkes elektrisches Feld geschaffen werden, um für eine ausreichend hohe elektrische Leistung von der Energy-Harvesting-Einrichtung entnehmen zu können. Die zweite Elektrode kann auf einer Innenseite des Leitungsträgers vorgesehen sein, um diese vor Beschädigungen zu schützen.

Ist die am Leitungsträger vorgesehene Elektrode über eine flexible elektrische Anschlussleitung mit der Energy-Harvesting-Einrichtung verbunden, kann eine hohe Standfestigkeit selbst bei vergleichsweise hohen Drehzahlen zur Verfügung gestellt werden.

Ein Bezugspotential kann der Energy-Harvesting-Einrichtung zur Verfügung gestellt werden, wenn die Energy-Harvesting-Einrichtung eine Masseleitung aufweist, die über den Rotor mit der Masse des Elektromotors elektrisch verbunden ist.

Eine standfeste Datenübertragung von Messdaten kann ermöglicht werden, wenn die Messeinrichtung einen Sensor und eine drahtlose Sendeeinrichtung zur Übermittlung der Sensordaten des Sensors aufweist.

Ein für die Energieversorgung ausreichendes Feld am Wicklungskopf kann sich ergeben, wenn der Elektromotor eine Motorsteuerung oder -regelung aufweist, welche die Wicklungsspannung der Statorwicklung mittels Pulsweitenmodulation (PWM) steuert oder regelt.

In den Figuren ist beispielsweise der Erfindungsgegenstand anhand einer Ausführungsvariante näher dargestellt. Es zeigen
- Fig. 1: eine axial geschnittene Ansicht auf einen teilweise dargestellten Elektromotor,
- Fig. 2: eine Schnittansicht nach II-II durch einen Leitungsträger einer Energy-Harvesting-Einrichtung des Elektromotors nach Fig. 1,
- Fig. 3: eine dreidimensionale Ansicht auf den Leitungsträger nach Fig. 2 mit einer Elektrode,
- Fig. 3a: eine dreidimensionale Ansicht auf den Leitungsträger nach Fig. 2 mit zwei Elektroden,
- Fig. 4: ein Prinzip-Schaltbild mit einer Energy-Harvesting-Einrichtung der nach Fig. 1 dargestellten Synchronmaschine mit einer Elektrode zur Energiegewinnung und
- Fig. 4a: eine zur Fig. 4 veränderte Energiegewinnung der Energy-Harvesting-Einrichtung mit zwei Elektroden.

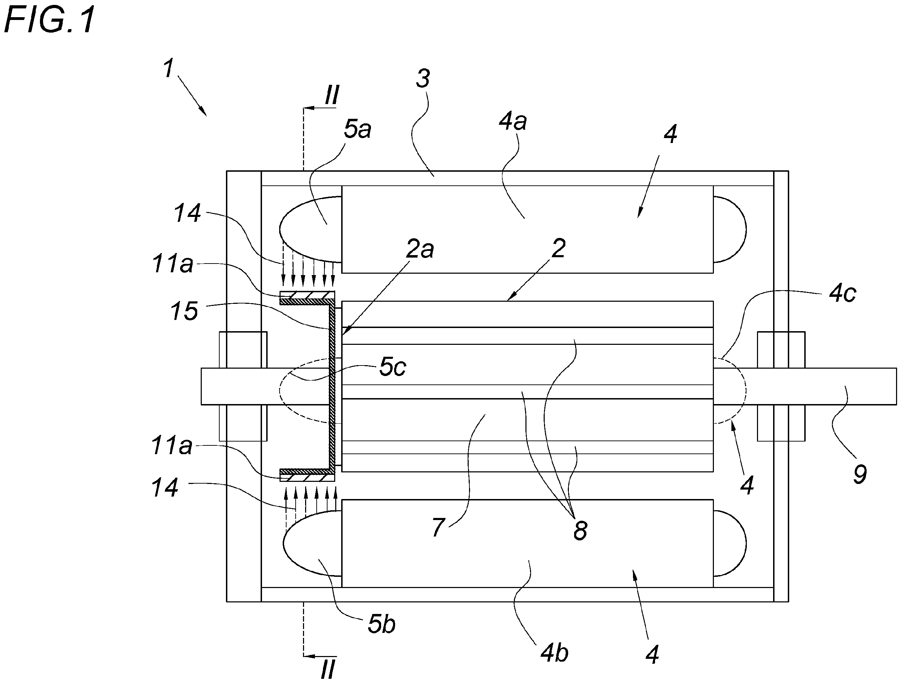

In Fig. 1 sind von einem Elektromotor 1, nämlich einem permanentmagneterregten Synchronmotor, ein Rotor 2 als Innenläufer und einen Stator 3 dargestellt.

Der Stator 3 weist eine mehrphasige Statorwicklung 4 zur Erzeugung eines Statordrehfelds auf, dessen drei Spulen 4a, 4b, 4c je einen Wicklungskopf 5a, 5b, 5c an beiden Enden 6a, 6b des Stators 3 ausbilden.

Der Rotor 2 weist ein Rotorjoch 7 und in Ausnehmungen des Rotorjochs 7 vorgesehene Permanentmagnete 8 auf, wobei das aus einem Blechpaket bestehende Rotorjoch 7 an einer Abtriebswelle 9 befestigt ist.

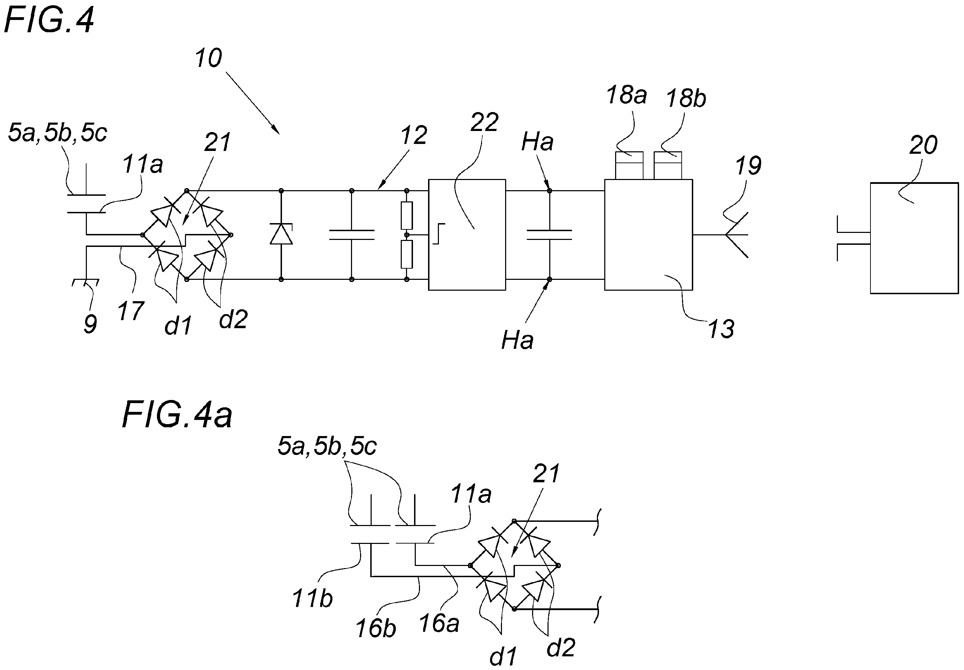

Der Elektromotor 1 weist zudem eine Energy-Harvesting-Einrichtung 10 mit einer Elektrode 11a und mit einer elektrischen Schaltung 12, die mit der Elektrode 11a verbunden ist auf - wie in Fig. 4 zu erkennen. Die Energy-Harvesting-Einrichtung 10 entzieht mit der Elektrode 11a dem, sich zwischen der Elektrode 11a und dem Wicklungskopf 5 der Statorwicklung 4 als Gegenelektrode ausbildenden elektrischen Feld 14, elektrische Energie, um mit dieser eine Messeinrichtung 13 elektrisch zu versorgen. Diese Messeinrichtung 13 ist an den elektrischen Ausgängen Ha der Energy-Harvesting-Einrichtung 10 angeschlossen, also mit ihr verbunden.

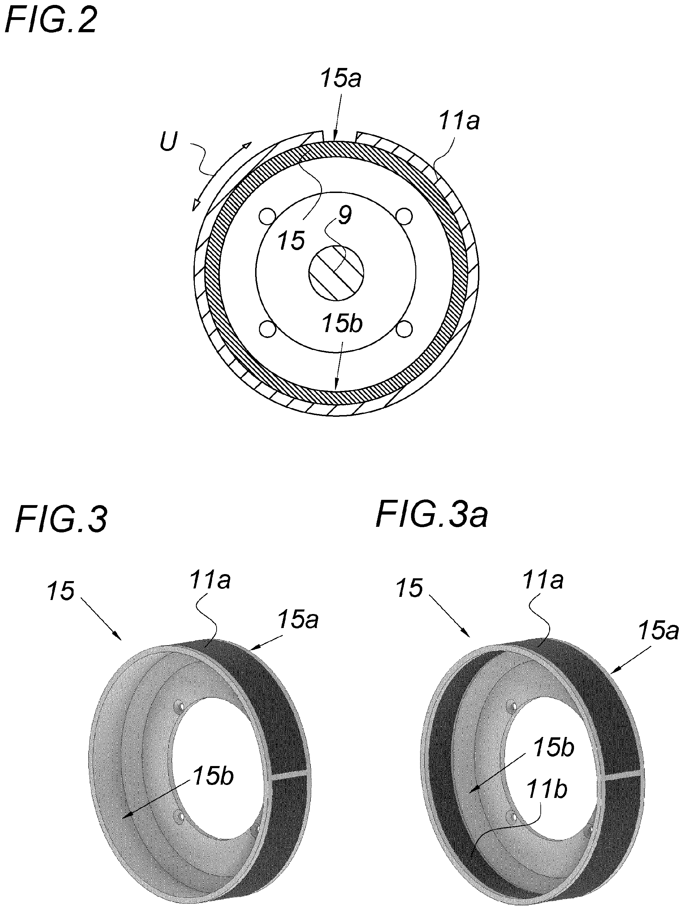

Die Energy-Harvesting-Einrichtung 10 und die Messeinrichtung 13 sind am Rotor 2 vorgesehen. Um trotz synchronem Mitlaufen des Rotors 2 dem Drehfeld elektrische Energie entnehmen zu können, erstreckt sich die Elektrode 11a in Umfangsrichtung U des Rotors 2 im Wesentlichen vollständig - wie in Fig. 3 zu erkennen. Zudem ist die Elektrode 11a in axialer Verlängerung des Rotors 7 angeordnet bzw. ist sie neben der Strinseite 2a des Rotors 2 angeordnet. Sie erstreckt sich in axialer Richtung von der Stirnseite 2a des Rotors weg. Im Ausführungsbeispiel steht die Elektrode 11a dem Rotorjoch 7 axial bis höchstens auf Höhe des freien Endes des Wicklungskopfes 5 vor.

Zudem ist die Elektrode 11a radial dem Rotor 2 vorspringend vorgesehen, um diese Elektrode 11a nahe am Wicklungskopf 5 anzuordnen und damit das elektrische Feld 14 zu maximieren.

Die Elektrode 11a wird von einer bandförmig verlaufenden Leiterbahn ausgebildet, wie in Fig. 2 und Fig. 3 zu erkennen.

Konstruktiv einfach gelöst, wird die Elektrode 11a am Rotor 2 mithilfe eines Leitungsträgers 15 aus Kunststoff befestigt, und zwar am Rotorjoch 7. Dieser Leitungsträger 15 schließt im Ausführungsbeispiel an die Stirnseite des Rotorjochs 7 an und trägt die erste Elektrode 11a auf seiner Außenseite 15a, wie in Fig. 2 und 3 dargestellt.

Zudem weist der Leitungsträger 15 einen hohlzylindrischen Abschnitt auf, der im Querschnitt kreisringförmig ist. Dadurch wird es möglich, die zweite Elektrode 11b der Elektroden 11a, 11b auf einer Innenseite 15b des Leitungsträgers 15 vorzusehen - wie der Fig. 3a zu entnehmen.

Beide Elektroden 11a, 11b sind damit einander gegenüberliegend auf Innen- und Ausßenseite 15a, 15b des Leitungsträgers 15 vorgesehen. Die Elektroden 11a, 11b sind auf den Leitungsträger 15 aufgedruckt.

Die Energy-Harvesting-Einrichtung 10 ist über je eine flexible elektrische Anschlussleitung 16a, 16b mit der ersten bzw. zweiten Elektrode 11a, 11b verbunden.

Die Elektrode 11a des Leitungsträgers 15, ist mit einem Gleichrichter 21, nämlich Zweiweggleichrichter (Zweipuls-Brücken-Gleichrichterschaltung B2), verbunden - und zwar mit einem ersten Wechselspannungseingang zwischen dem ersten Diodenpaar d1.

Die Energy-Harvesting-Einrichtung 10 weist auch eine Masseleitung 17 auf, die über die Abtriebswelle 9 mit der Masse des Elektromotors 1 verbunden ist, wie in Fig. 4 schematisch dargestellt. Diese Masse ist an einen anderen zweiten Wechselspannungseingang zwischen dem zweiten Diodenpaar d2 des Gleichrichters 12 angeschlossen.

Werden zwei Elektroden 11a, 11b zum "Energy Harvesting" verwendet, so ist - wie in Fig. 4a zu erkennen - die zweite Elektrode 11b (anstatt der Masse wie in Fig. 4 dargestellt) über die Anschlussleitung 16b an den zweiten Wechselspannungseingang zwischen dem zweiten Diodenpaar d2 angeschlossen.

Die Mithilfe der Energy-Harvesting-Einrichtung 10 mit elektrischer Energie elektrisch versorgte Messeinrichtung 13 weist mehrere Temperatursensoren 18a, 18b auf, deren Messdaten über eine drahtlose Sende- und Empfangseinrichtung 19, beispielsweise unter Verwendung einer Bluetooth-Technologie, übertragen werden.

Beispielsweise werden diese Messdaten einer Motorsteuerung oder -regelung 20 des Elektromotors 1 übermittelt. Diese physikalischen Messdaten können etwa von der Motorsteuerung oder -regelung 20 berücksichtigt werden, beispielsweise bei der Steuerung/Regelung der Wicklungsspannung der Statorwicklung 4 mittels Pulsweitenmodulation (PWM).

Jene sich zwischen der Elektrode 11a und dem Wickelkopf 5a, 5b, 5c ausbildende Kapazität kann einige pF erreichen. Das mithilfe der Pulsweitenmodulation (PWM) erzeugte Wechselspannungssignal an der Statorwicklung 4 weist insbesondere hochfrequente Anteile auf, welche durch ein Schalten des Wechselrichters entstehen. Diese hochfrequenten Anteile koppeln sich in die Elektrode 11a dominant ein und führen zu einem Stromfluss am rotorseitigen Gleichrichter 21 der Energy-Harvesting-Einrichtung 10. Dadurch wird am Gleichrichter 21 eine Ausgangsspannung in ausreichender Höhe erzeugt, die vom DC-DC Konverter 22 der Energy-Harvesting-Einrichtung 10 auf eine gewünschte Höhe am Ausgang Ha zur elektrischen Energieversorgung der Messeinrichtung 13 geregelt wird.

## Patentansprüche

1. Elektromotor, insbesondere permanentmagneterregter Synchronmotor, mit einem Stator (3), der eine Statorwicklung (4) zur Erzeugung eines Statordrehfelds aufweist, wobei die elektrische Statorwicklung (4) mindestens einen Wicklungskopf (5a, 5b, 5c) aufweist, mit einem Rotor (2), mit einer Energy-Harvesting-Einrichtung (10), die ausgebildet ist, dem Wicklungskopf (5a, 5b, 5c) der Statorwicklung (4) Energie zu entziehen, und mit einer Messeinrichtung (13), die für ihre elektrische Energieversorgung mit der Energy-Harvesting-Einrichtung (10) verbunden ist, **dadurch gekennzeichnet, dass** die Energy-Harvesting-Einrichtung (10) und die Messeinrichtung (13) am Rotor (2) vorgesehen sind, wobei die Energy-Harvesting-Einrichtung (10) mindestens eine Elektrode (11a, 11b) zum Entziehen von elektrischer Energie aus einem sich zwischen dieser Elektrode (11a, 11a) und dem Wicklungskopf (5a, 5b, 5c) als Gegenelektrode ausbildenden elektrischen Feld (14) aufweist, welche Elektrode (11a, 11b) sich in Umfangsrichtung (U) des Rotors (2) erstreckt und neben der Strinseite (2a) des Rotors (2) angeordnet ist.

2. Elektromotor nach Anspruch 1, **dadurch gekennzeichnet, dass** eine, vorzugsweise bandförmig verlaufende, Leiterbahn (11a) die Elektrode (11a, 11b) ausbildet.

3. Elektromotor nach Anspruch 1 oder 2, **dadurch gekennzeichnet, dass** die Elektrode (11a) dem Rotor (2) radial vorspringend vorgesehen ist.

4. Elektromotor nach einem der Ansprüche 1 bis 3, **dadurch gekennzeichnet, dass** der Rotor (2) ein Rotorjoch (7) und einen, insbesondere elektrisch isolierenden, Leitungsträger (15) aufweist, der am Rotorjoch (7) befestigt ist, insbesondere an diesem anschließt, und die Elektrode (11a, 11b) trägt.

5. Elektromotor nach Anspruch 4, **dadurch gekennzeichnet, dass** der Leitungsträger (15) einen im Querschnitt kreisringförmigen, insbesondere hohlzylindrischen, Abschnitt, aufweist, an dem die Elektrode (11a, 11b) vorgesehen ist.

6. Elektromotor nach einem der Ansprüche 4 bis 5, **dadurch gekennzeichnet, dass** der Leitungsträger (15) aus Kunststoff besteht, auf dem die Elektrode (11a, 11b) aufgedruckt ist.

7. Elektromotor nach einem der Ansprüche 4 bis 6, **dadurch gekennzeichnet, dass** die erste Elektrode (11a) auf einer Außenseite (15a) des Leitungsträgers (15) und/oder die zweite Elektrode (11b) auf einer Innenseite (15b) des Leitungsträgers (15) vorgesehen ist.

8. Elektromotor nach einem der Ansprüche 1 bis 7, **dadurch gekennzeichnet, dass** die am Leitungsträger (15) vorgesehene Elektrode (11a, 11b) über eine flexible elektrische Anschlussleitung (16a, 16b) mit der Energy-Harvesting-Einrichtung (10) verbunden ist.

9. Elektromotor nach einem der Ansprüche 1 bis 8, **dadurch gekennzeichnet, dass** die Energy-Harvesting-Einrichtung (10) eine Masseleitung (17) aufweist, die über den Rotor (2) mit der Masse des Elektromotors (1) elektrisch verbunden ist.

10. Elektromotor nach einem der Ansprüche 1 bis 9, **dadurch gekennzeichnet, dass** die Messeinrichtung (13) einen Sensor (18a, 18b) und eine drahtlose Sendeeinrichtung (19) zur Übermittlung der Sensordaten des Sensors (18a, 18b) aufweist.

11. Elektromotor nach einem der Ansprüche 1 bis 10, **dadurch gekennzeichnet, dass** der Elektromotor (1) eine Motorsteuerung oder -regelung (20) aufweist, welche die Wicklungsspannung der Statorwicklung (4) mittels Pulsweitenmodulation (PWM) steuert oder regelt.
